# EUROPEAN PATENT SPECIFICATION

(11) **EP 2 264 825 B1**
(45) Date of publication and mention of the grant of the patent: **26.03.2014**
(21) Application number: 09806068.4
(22) Date of filing: 16.01.2009
(51) Int. Cl.: H01M 12/08, H01M 10/44, H01M 10/34, H01M 2/02

(54) **AIR SECONDARY BATTERY AND METHOD FOR MANUFACTURING THE SAME**
LUFTSEKUNDÄRBATTERIE UND HERSTELLUNGSVERFAHREN DAFÜR
BATTERIE SECONDAIRE À AIR ET PROCÉDÉ DE FABRICATION ASSOCIÉ

(43) Date of publication of application: 22.12.2010
(73) Proprietor: TOYOTA JIDOSHA KABUSHIKI KAISHA, Toyota-shi, Aichi-ken, 471-8571 (JP)
(72) Inventor: NISHIKOORI, Hidetaka, Toyota-shi, Aichi-ken, 471-8571 (JP); NAKANISHI, Shinji, Toyota-shi, Aichi-ken, 471-8571 (JP)
(74) Representative: Winter, Brandl, Fürniss, Hübner, Röss, Kaiser, Polte - Partnerschaft
(86) International application number: PCT/JP2009/050546
(87) International publication number: WO 2010/082338

(56) References cited:
- WO-A2-2009/013629
- GB-A- 861 159
- JP-A- 2001 273 935
- JP-A- 2008 300 346
- JP-A- 2009 032 399
- US-A1- 2004 241 537

## Description

### Technical Field

The present invention relates to an air secondary battery that can inhibit deterioration in charge-discharge properties caused by oxygen generated in an air cathode layer during charge.

### Background Art

An air secondary battery that uses a nonaqueous liquid electrolyte is a secondary battery that uses air (oxygen) as a cathode active material and has advantages in that an energy density is high and miniaturization and weight saving are readily achieved. Accordingly, an air secondary battery is gathering attention as a high capacity secondary battery superior to a lithium secondary battery that is at present in wide use.

Such an air secondary battery comprises, for example, an air cathode layer that has a conductive material (such as carbon black), a catalyst (such as manganese dioxide) and a binder (such as polyvinylidene fluoride); an air cathode current collector that collects a current of the air cathode layer; an anode layer that has an anode active material (such as metal Li) ; an anode current collector that collects a current of the anode layer; and a non-aqueous liquid electrolyte that bears conduction of metal ions (such as lithium ions).

An air secondary battery that makes use of oxygen in air as a supply source of oxygen used during discharge has been known. Such an air secondary battery usually has an opening in an exterior body (battery case), supplies oxygen from the opening during discharge, and exhausts oxygen from the opening during charge. On the other hand, an air secondary battery using a hermetically sealed exterior body that does not have an opening has been known. Document US2004/0241537 discloses an air battery with a battery container comprising air intake holes. For example, in Patent Document 1, an air secondary battery that has an exterior body, inside of which a gas containing pressurized oxygen is encapsulated, has been disclosed. The technology, by use of a hermetically sealed exterior body, inhibits moisture in air from penetrating inside of a battery and thereby improves cycle characteristics of the battery. Furthermore, in the technology, a gas containing pressurized oxygen is encapsulated inside of an exterior body and thereby discharge properties are improved.

Patent Document 1: Japanese Patent Application Laid-Open (JP-A) No. 2001-273935

### Disclosure of the Invention

### Problem to be Solved by the Invention

In a conventional air secondary battery, there is a problem in that when the charge-discharge is repeated, the charge-discharge properties (such as discharged capacitance maintenance) are deteriorated. The reason why for this is variously considered. As one of factors, it is considered that oxygen generated in an air cathode layer during charge causes the deterioration. The present invention was achieved considering the above-mentioned situations and mainly intends to provide an air secondary battery that can inhibit deterioration in the charge-discharge properties caused by oxygen generated in an air cathode layer during charge. Means for Solving the Problem

In order to solve the problem, the present inventors studied hard and came to a consideration that the reason why the charge-discharge properties are deteriorated exists in that bubbles of oxygen generated in an air cathode layer during charge stay in an interface between an air cathode layer and an electrolyte layer and thereby disturb ionic conduction in the interface. In this connection, the inventors lowered a pressure inside of an exterior body and found that oxygen generated in an air cathode layer during charge is readily diffused and thereby the charge-discharge properties are inhibited from deteriorating. The present invention is completed based on such findings.

That is, the invention provides an air secondary battery, comprising: a power generating element constituted of an air cathode layer containing a conductive material, an anode layer containing an anode active material, and an electrolyte layer formed between the air cathode layer and the anode layer; and an exterior body that houses the power generating element, wherein the exterior body is hermetically sealed with an oxygen-containing gas encapsulated therein; and at a charge start time, a pressure inside of the exterior body is lower than an atmospheric pressure.

According to the invention, since, at the charge start time, the inside of an exterior body is depressurized, oxygen generated in the air cathode layer during charge is prone to diffuse. Accordingly, bubbles of oxygen are inhibited from staying in an interface between the air cathode layer and the electrolyte layer and thereby it is possible to inhibit the ionic conduction in an interface from being disturbed. As the result, an air secondary battery in which the charge-discharge properties are inhibited from deteriorating can be obtained.

In the invention, at the charge start time, the power generating element is preferably in a state where state of charge (SOC) is 50% or less. This is because charge can be efficiently carried out.

In the invention, a pressure inside of the exterior body is preferably 0.9 atm or less. This is because, as long as the pressure is in the range, oxygen generated in the air cathode layer can be efficiently diffused.

Furthermore, the invention provide a method for producing an air secondary battery, comprising the steps of: hermetically sealing an exterior body in which a power generating element constituted of an air cathode layer containing a conductive material, an anode layer containing an anode active material, and an electrolyte layer formed between the air cathode layer and the anode layer is housed with an oxygen-containing gas encapsulated therein; discharging the power generating element; and depressurizing a pressure inside of the exterior body lower than an atmospheric pressure after the hermetically sealing step.

According to the invention, by performing a discharge step and a depressurizing step, an air secondary battery in which a power generating element is in a discharged state and the inside of an exterior body is in a depressurized state can be obtained. Thereby, oxygen generated in an air cathode layer during charge can be readily diffused. Accordingly, bubbles of oxygen can be inhibited from staying in an interface of an air cathode layer and an electrolyte layer and thereby it is possible to inhibit ionic conduction in an interface from being disturbed. As a result, an air secondary battery in which charge-discharge properties are inhibited from deteriorating can be obtained.

In the invention, during the discharging step, the power generating element is preferably discharged to a state where SOC is 50% or less. This is because as long as the SOC is in the above-mentioned range, time-lapse deterioration during initial storage can be efficiently inhibited.

In the invention, during the depressurizing step, a pressure inside of the exterior body is preferably depressurized to a pressure of 0.9 atm or less. This is because, as long as the pressure is in the range, oxygen generated in the air cathode layer can be efficiently diffused.

Furthermore, the invention provides a method for producing an air secondary battery, comprising the step of: hermetically sealing an exterior body in which a power generating element constituted of an air cathode layer containing a conductive material and a metal oxide that is a discharge product, an anode layer containing an anode active material, and an electrolyte layer formed between the air cathode layer and the anode layer is housed with an oxygen-containing gas encapsulated therein; and depressurizing a pressure inside of the exterior body lower than an atmospheric pressure after the hermetically sealing step.

According to the invention, by using an air cathode layer containing a metal oxide that is a discharge product, an air secondary battery in which a power generating element is in a discharged state and the inside of an exterior body is in a depressurized state can be obtained more conveniently.

In the invention, during the depressurizing step, a pressure inside of the exterior body is preferably depressurized to a pressure of 0.9 atm or less. This is because, as long as the pressure is in the range, oxygen generated in the air cathode layer can be efficiently diffused.

### Effect of the Invention

The present invention has an effect that it is possible to inhibit deterioration in the charge-discharge properties caused by oxygen generated in an air cathode layer during charge.

### Brief Description of the Drawings

FIG. 1 is a schematic sectional view showing an example of an air secondary battery of the invention.
FIG. 2 is a schematic sectional view showing an air secondary battery assembled under atmospheric pressure.
FIGS. 3A to 3E are a schematic sectional view showing an example of a first embodiment in a method for producing an air secondary battery of the invention.
FIGS. 4A to 4D are a schematic sectional view showing an example of a second embodiment in a method for producing an air secondary battery of the invention.
FIG. 5 is a schematic sectional view showing an evaluation cell used in Example 1.

### Description of Reference Numerals

- 1a: Anode case

- 1b: Air cathode case
- 2: Anode current collector
- 2a: Anode lead
- 3: Anode layer
- 4: Air cathode layer
- 5: Air cathode current collector
- 5a: Air cathode lead
- 6: Separator
- 7: Non-aqueous liquid electrolyte
- 8: Packing
- 9a: Gas inlet
- 9b: Gas outlet

### Best Mode for Carrying Out the Invention

In what follows, an air secondary battery of the invention and a method for producing the same will be described.

### A. Air secondary battery

In the beginning, an air secondary battery of the invention will be described. An air secondary battery of the invention comprises a power generating element constituted of an air cathode layer containing a conductive material, an anode layer containing an anode active material, and an electrolyte layer formed between the air cathode layer and the anode layer; and an exterior body that houses the power generating element, wherein the exterior body is hermetically sealed with an oxygen-containing gas encapsulated therein, and at a charge start time, a pressure inside of the exterior body is lower than atmospheric pressure.

According to the invention, at the charge start time, the inside of the exterior body is depressurized; as a result, oxygen generated in an air cathode layer during charge is easy to diffuse . Accordingly, bubbles of oxygen can be inhibited from staying in an interface of the air cathode layer and the electrolyte layer and thereby it is possible to inhibit ionic conduction in an interface from being disturbed. Thereby, an air secondary battery in which charge-discharge properties are inhibited from deteriorating can be obtained. Furthermore, in an air secondary battery of the invention, since the inside of the exterior body is depressurized at the charge start time, there is no need of connecting another device such as a vacuum pump. As a result, miniaturization of the air secondary battery and an improvement in energy efficiency accompanying the miniaturization can be attained. From these viewpoints, the exterior body is preferable not to have a gas flow portion (such as gas inlet and gas outlet described below) that flows a gas between the inside and the outside of the exterior body.

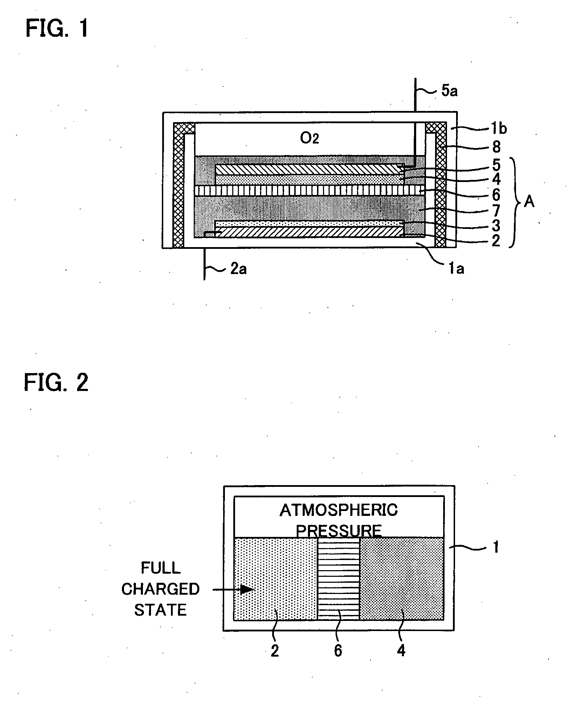

FIG. 1 is a schematic sectional view showing an example of an air secondary battery of the invention. An air secondary battery shown in FIG. 1 comprises a power generating element A; and an exterior body that houses the power generating element A and is made of an anode case 1a and an air cathode case 1b. Herein, the power generating element A comprises an anode current collector 2 formed on an inside bottom face of the anode case 1a, an anode layer 3 formed on the anode current collector 2 and containing an anode active material (such as metal Li), an air cathode layer 4 containing a conductive material (such as carbon black), an air cathode current collector 5 that collects a current of the air cathode layer 4, a separator 6 formed between the air cathode layer 4 and the anode layer 3, and a nonaqueous liquid electrolyte 7 that bears ionic conduction between the air cathode layer 4 and the anode layer 3. An anode lead 2a is connected to the anode current collector 2 and an air cathode lead 5a is connected to the air cathode current collector 5. A packing 8 is disposed between the anode case 1a and the air cathode case 1b. In the invention, the exterior body A is hermetically sealed with an oxygen-containing gas (O₂ in FIG. 1) encapsulated therein and a pressure of the inside of the exterior body is set lower than the atmospheric pressure at the charge start time.

Here, an air secondary battery assembled under atmospheric pressure is shown in FIG. 2. The air secondary battery assembled under atmospheric pressure has, immediately after the assemblage, a metal element (such as Li) that becomes conductive ions in an anode layer 2. Accordingly, immediately after the assemblage, the air secondary battery is in a full charge state. On the other hand, a discharge reaction of an air secondary battery is generally a reaction that consumes oxygen. As a result, it is assumed that after an air secondary battery assembled under atmospheric pressure is discharged, the inside of the exterior body becomes lower than atmospheric pressure. However, such a pressure variation is usually negligibly small. Accordingly, even when the air secondary battery assembled under atmospheric pressure is discharged, at the charge start time, a pressure of the inside of the exterior body does not become lower than atmospheric pressure. On the other hand, in the air secondary battery of the invention, a positive depressurized state is formed inside of the exterior body. If the pressure variation is not negligible, at the charge start time, a pressure of the inside of the exterior body is preferably lower than a pressure in a depressurized state generated by a discharge reaction.

In what follows, an air secondary battery of the invention will be described by dividing into members of the air secondary battery and a configuration of the air secondary battery.

### 1. Members of air secondary battery

An air secondary battery of the invention comprises: a power generating element constituted of an air cathode layer containing a conductive material, an anode layer containing an anode active material, and an electrolyte layer formed between the air cathode layer and the anode layer; and an exterior body that houses the power generating element. Furthermore, an oxygen-containing gas is encapsulated inside of the exterior body.

### (1) Power generating element

A power generating element in the invention contains at least an air cathode layer, an anode layer, and an electrolyte layer, and, as required, may contain an air cathode current collector and an anode current collector. In the invention, a member having an air cathode layer and an air cathode current collector is called an air cathode and a member having an anode layer and an anode current collector is called an anode.

### (i) Air cathode layer

An air cathode layer used in the invention contains at least a conductive material. As required, the air cathode layer may further contain at least one of a catalyst and a binder.

A conductive material used in the air cathode layer is not particularly restricted as long as it has conductivity. For example, a carbon material can be cited. This is because the carbon material is excellent in conductivity and corrosion resistance. Examples of the carbon material include graphite, acetylene black, carbon nanotube, carbon fiber, and mesoporous carbon. Content of the conductive material in the air cathode layer is preferably in the range of, for example, 10% by weight to 99% by weight.

Furthermore, the air cathode layer used in the invention may contain a catalyst that accelerates a reaction. This is because an electrode reaction is more smoothly carried out. In particular, it is preferable that a conductive material supports a catalyst. Examples of the catalyst include manganese dioxide (MnO₂) and cobalt phthalocyanine. Content of the catalyst in the air cathode layer is in the range of, for example, 1% by weight to 30% by weight and preferably in the range of 5% by weight to 20% by weight.

The air cathode layer used in the invention may contain a binder that fixes the conductive material. Examples of the binder include fluorine-containing binders such as polyvinylidene fluoride (PVDF) and polytetrafluoroethylene (PTFE). Content of the binder in the air cathode layer is, for example, 40% by weight or less and preferably in the range of 1% by weight to 10% by weight.

A thickness of the air cathode layer is, though different depending on applications or the like of the air secondary battery, for example, in the range of 2 µm to 500 µm and preferably in the range of 5 µm to 300 µm.

The air cathode current collector used in the invention collects a current of the air cathode layer. Examples of a material of the air cathode current collector include a metal material and a carbon material, and the carbon material is preferred. This is because the carbon material is excellent in corrosion resistance. As a carbon material like this, for example, carbon fibers are preferred. This is because electrons can flow through fibers and thereby electroconductivity is high. Examples of the air cathode current collector that uses carbon fiber include carbon cloth and carbon paper. On the other hand, examples of metal material include stainless, nickel, aluminum, iron and titanium. Examples of the air cathode current collector that uses a metal material include a metal mesh.

A configuration of an air cathode current collector used in the invention is not particularly restricted as long as it can secure desired electron conductivity. The configuration thereof may be either a porous configuration having gas diffusivity or a dense configuration that does not have gas diffusivity. Above all, in the invention, it is preferable that the air current collector has a porous configuration having gas diffusivity. This is because oxygen can be rapidly diffused. The porosity of the porous configuration is not particularly restricted. However, the porosity is preferably in the range of, for example, 20% to 99%.

A thickness of the air cathode current collector is in the range of, for example, 10 µm to 1000 µm and preferably in the range of 20 µm to 400 µm.

A method for forming an air cathode is not particularly restricted as long as it can form the above-mentioned air cathode. As an example of a method for forming an air cathode, a method where firstly an air cathode layer forming composition containing a conductive material, a catalyst, a binder, and a solvent is prepared, then, the composition is coated on an air cathode current collector and dried can be cited. Examples of the solvent include acetone, N-methyl-2-pyrolidone (NMP), N, N-dimethylacetamide (DMA), N, N-dimethylformamide (DMF), methyl ethyl ketone (MEK), and tetrahydrofuran (THF).

### (ii) Anode layer

In the next place, an anode layer used in the invention will be described. An anode layer used in the invention contains at least an anode active material. The anode active material is not particularly restricted as long as it can store and release metal ions. Examples of the anode active material include metal alone, alloys, metal oxides, and metal nitrides. Examples of the metal ion include an alkali metal ion such as a Li ion, a Na ion, or a K ion; an alkaline earth metal ion such as a Mg ion or a Ca ion; an amphoteric metal ion such as an Al ion. Above all, an alkali metal ion is preferable and a Li ion is particularly preferable. This is because a battery having high energy density can be obtained.

Furthermore, an anode layer used in the invention may contain either an anode active material alone or at least one of a conductive material and a binder in addition to the anode active material. For example, when an anode active material is flaky, an anode layer may contain an anode active material alone. On the other hand, when an anode active material is powdery, an anode layer can contain, for example, an anode active material, a conductive material and a binder. The conductive material and the binder are the same as that described in the "(i) Air cathode layer"; accordingly descriptions thereof are omitted here. Furthermore, a thickness of an anode layer is preferably appropriately selected in accordance with a configuration of an aimed air secondary battery.

An anode current collector used in the invention collects a current of an anode layer. A material of the anode current collector is not particularly restricted as long as it has conductivity. Examples of the material of the anode current collector include copper, stainless and nickel. Examples of a shape of the anode current collector include a flaky shape, a planar shape and a meshed (grid) shape. A thickness of the anode current collector is preferably appropriately selected in accordance with a configuration of an aimed air secondary battery.

A method for forming an anode is not particularly restricted as long as it can form the above-mentioned anode. As an example of a method for forming an anode, a method where a flaky anode active material is disposed on an anode current collector, followed by pressurizing can be cited. Furthermore, as another example of a method for forming an anode, a method where an anode layer-forming composition containing an anode active material, a binder and a solvent is prepared, then, the composition is coated on an anode current collector, followed by drying can be cited.

### (iii) Electrolyte layer

In the next place, an electrolyte layer used in the invention will be described. An electrolyte layer used in the invention is a layer that is formed between the air cathode layer and the anode layer and performs conduction of metal ions. Examples of an electrolyte that constitutes an electrolyte layer include a liquid form electrolyte (liquid electrolyte), a gel electrolyte, and a solid electrolyte. Above all, a liquid electrolyte and a gel electrolyte are preferred and a liquid electrolyte is particularly preferred. This is because high ion conductivity is obtained. Furthermore, when an electrolyte used in the invention is a liquid electrolyte or a gel electrolyte, a solvent that is used may be either a nonaqueous solvent or water. Above all, a nonaqueous solvent is preferred.

It is preferable that a kind of a nonaqueous liquid electrolyte is appropriately selected in accordance with a kind of conducting metal ions. For example, a nonaqueous liquid electrolyte of a lithium air secondary battery usually contains a lithium salt and a nonaqueous solvent. Examples of the lithium salt include an inorganic lithium salt such as LiPF₆, LiBF₄, LiClO₄, or LiAsF₆; and an organic lithium salt such as LiCF₃SO₃, LiN(CF₃SO₂)₂, LiN(C₂F₅SO₂)₂, or LiC(CF₃SO₂)₃. Examples of the nonaqueous solvent include ethylene carbonate (EC), propylene carbonate (PC), dimethyl carbonate (DMC), diethyl carbonate (DEC), ethyl methyl carbonate (EMC), butylene carbonate, γ-butylolactone, sulfolane, acetonitrile, 1,2-dimethoxymethane, 1,3-dimethoxypropane, diethyl ether, tetrahydrofuran, 2-methyl tetrahydrofuran and mixtures thereof. The nonaqueous solvent is preferred to be a solvent high in oxygen solubility. This is because dissolved oxygen can be efficiently used in a reaction. A concentration of a lithium salt in the nonaqueous electrolyte is, for example, in the range of 0.5 mol/L to 3 mol/L. In the invention, as the nonaqueous liquid electrolyte, a liquid having low volatility such as an ionic liquid may be used.

Furthermore, a nonaqueous gel electrolyte used in the invention is usually obtained by gelling a nonaqueous liquid electrolyte by adding a polymer thereto. For example, a nonaqueous gel electrolyte of a lithium air secondary battery can be obtained by gelling the nonaqueous liquid electrolyte by adding a polymer such as polyethylene oxide (PEO), polyacrylnitrile (PAN), or polymethyl methacrylate (PMMA) thereto. In the invention, a LiTFSI (LiN(CF₃SO₂)₂)-PEO based nonaqueous gel electrolyte is preferable.

An air secondary battery of the invention preferably has a separator between an air cathode layer and an anode layer. This is because a battery high in safety can be obtained. Examples of the separator include a porous film made of polyethylene or polypropylene; and a nonwoven fabric such as a resin nonwoven fabric or a glass fiber nonwoven fabric.

### (2) Exterior body

Then, an exterior body used in the invention will be described. An exterior body used in the invention houses the power generating element. Furthermore, the exterior body is hermetically sealed with an oxygen-containing gas encapsulated. Examples of a material of the exterior body include a metal such as iron, nickel, stainless, or aluminum; glass; and a polymer material. It is usually necessary for the exterior body to have a structure stable to pressure variation. In the invention in particular, the inside of the exterior body is depressurized; accordingly, the exterior body preferably has a structure stable to depressurization. A thickness of the exterior body is preferable to be, for example, 0.05 mm or more. A shape of the exterior body is not particularly restricted. Examples of the shape of the exterior body include a coin shape, a plain plate shape, a cylindrical shape, and a rectangular shape. Furthermore, an internal volume of the exterior body is preferably appropriately selected by considering factors such as a magnitude of a power generating element and an oxygen concentration in a depressurized state.

### (3) Oxygen-containing gas

In the next place, an oxygen-containing gas used in the invention will be described. In the invention, an oxygen-containing gas is encapsulated inside of the exterior body. The oxygen-containing gas used in the invention is not particularly restricted as long as it is a gas containing at least oxygen. As a component other than oxygen gas, at least one kind selected from a group consisting of, for example, nitrogen, hydrogen, methane, and ethylene can be cited. Above all, the oxygen-containing gas in the invention is preferable to be high in oxygen concentration and particularly preferable to be a pure oxygen gas. This is because a discharge reaction can be efficiently carried out. In the invention, air may be used as an oxygen-containing gas. Furthermore, in the case where, for example, a nonaqueous air secondary battery is formed, content of moisture contained in the oxygen-containing gas is preferable to be as small as possible. This is because a nonaqueous liquid electrolyte can be inhibited from deteriorating. A moisture content contained in the oxygen-containing gas is preferable to be, for example, 1000 ppm or less and more preferable to be 500 ppm or less.

### 2. Configuration of air secondary battery

Then, a configuration of an air secondary battery of the invention will be described. The air secondary battery of the invention is hermetically sealed with an oxygen-containing gas encapsulated in an exterior body and a pressure inside of the exterior body is lower than atmospheric pressure at the charge start time.

In the invention, at the charge start time, a power generating element is preferably in a state where SOC is 50% or less, more preferably in a state where the SOC is 20% or less, and particularly preferably in a state where the SOC is 5% or less. On the other hand, in the invention, at the charge start time, the power generating element is preferably in a state where the SOC is 0% or more. Furthermore, in the invention, at the charge start time in the first charge, the SOC of the power generating element is preferably in the above-mentioned range.

In the invention, at the charge start time, a pressure inside of the exterior body is lower than atmospheric pressure. Above all, in the invention, a pressure inside of the exterior body is preferable to be 0.9 atm or less and more preferable to be 0.5 atm or less. This is because when the pressure is in the range, oxygen generated in an air cathode layer can be efficiently diffused. On the other hand, in the invention, the pressure inside of the exterior body is preferable to be 0.01 atm or more. This is because when the pressure inside of the exterior body is excessively reduced, an oxygen concentration becomes relatively low and thereby sufficient discharge property may not be exerted.

Furthermore, a kind of an air secondary battery of the invention varies depending on a kind of a metal ion that is a conductive ion. Examples of the metal ion include an alkali metal ion such as a Li ion, a Na ion, or a K ion; an alkaline earth metal ion such as a Mg ion or a Ca ion; and an amphoteric metal ion such as an Al ion, among these, an alkali metal ion being preferable and a Li ion being particularly preferable. This is because a battery high in energy density can be obtained. Examples of application of the air secondary battery of the invention include an in-car battery, a stationary power supply battery, and a home power supply battery.

### B. Method for producing air secondary battery

In the next place, methods of the invention for producing an air secondary battery will be described. The methods of the invention for producing an air secondary battery can be roughly divided into two embodiments. In what follows, descriptions for every embodiment will be given.

### 1. First embodiment

A first embodiment of a method of the invention for producing an air secondary battery comprises the steps of: hermetically sealing an exterior body in which a power generating element that is constituted of an air cathode layer containing a conductive material, an anode layer containing an anode active material, and an electrolyte layer formed between the air cathode layer and the anode layer is housed with an oxygen-containing gas encapsulated therein; discharging the power generating element; and depressurizing a pressure inside of the exterior body to a pressure lower than the atmospheric pressure after the hermetically sealing step.

According to the first embodiment, when a discharging step and a depressurizing step are performed, an air secondary battery where a power generating element is discharged and the inside of an exterior body is depressurized can be obtained. Thereby, oxygen generated in an air cathode layer during charge can be easily diffused. Accordingly, bubbles of oxygen can be inhibited from staying in an interface of an air cathode layer and an electrolyte layer and thereby it is possible to inhibit ionic conduction in an interface from being disturbed. As a result, an air secondary battery in which charge-discharge properties are inhibited from deteriorating can be obtained. Furthermore, in the air secondary battery obtained according to the first embodiment, the inside of the exterior body is depressurized at the charge start time; accordingly, there is no need of connecting another device such as a vacuum pump. As a result, miniaturization of the air secondary battery and an improvement in energy efficiency accompanying the miniaturization can be attained. Furthermore, according to the first embodiment, an air secondary battery in which a power generating element is in a discharged state can be obtained. Accordingly, a metal ion (such as Li ion) that is a conducting ion is rendered a chemically stable metal oxide (such as Li₂O, or Li₂O₂) in an air cathode layer. As a result, there is an advantage that time-lapse deterioration during initial storage can be efficiently suppressed.

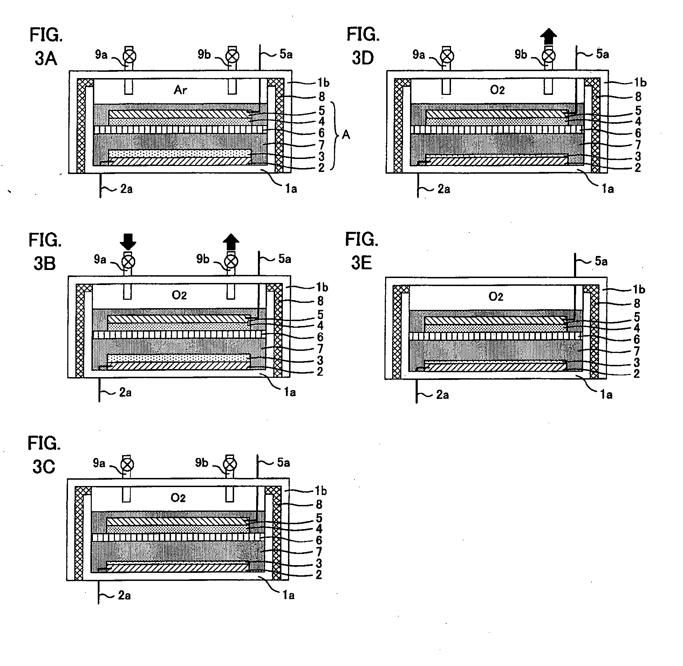

FIGS. 3A to 3E are a schematic sectional view showing an example of the first embodiment in a method of the invention for producing an air secondary battery. In a method for producing an air secondary battery shown in FIGS. 3A to 3E, firstly, in an argon atmosphere, a power generating element is formed inside of an anode case 1a, thereafter, the power generating element is hermetically sealed with a packing 8 and an air cathode case 1b (FIG. 3A). In this case, the anode case 1a and the air cathode case 1b form an exterior body. Here, a power generating element A in FIG. 3A is the same as that shown in the FIG. 1. On the other hand, a gas inlet 9a and a gas outlet 9b are disposed to the air cathode case 1b. In the next place, as shown in FIG. 3B, oxygen is introduced from the gas inlet 9a and simultaneously therewith a gas is exhausted from the gas outlet 9b to replace the inside of the exterior body from an argon atmosphere to an oxygen atmosphere. Then, as shown in FIG. 3C, the power generating element is discharged. During discharge, metal ions (such as Li ions) are generated from an anode active material (such as metal Li) and the metal ions become a metal oxide (such as Li₂O, Li₂O₂) in the air cathode layer. Then, as shown in FIG. 3D, a gas is exhausted from the gas outlet 9b to depressurize the inside of the exterior body. For example, a vacuum pump can be used to exhaust. At the last, as shown in FIG. 3E, by removing the gas inlet 9a and the gas outlet 9b with a depressurized state maintaining, an air secondary battery can be obtained.

In what follows, a first embodiment in a method of the invention for producing an air secondary battery will be described step by step.

### (1) Hermetically sealing step

Firstly, a hermetically sealing step in the first embodiment will be described. A hermetically sealing step in the first embodiment is a step for hermetically sealing an exterior body in which a power generating element that is constituted of an air cathode layer containing a conductive material, an anode layer containing an anode active material, and an electrolyte layer formed between the air cathode layer and the anode layer is housed with an oxygen-containing gas encapsulated therein.

A method for forming the power generating element in the first embodiment is not particularly restricted as long as it can form the predetermined power generating element. For example, when an electrolyte contained in an electrolyte layer of the power generating element is a liquid form electrolyte or a gel electrolyte, usually, a power generating element is formed inside of an exterior body. In the FIG. 3A, firstly, an anode current collector 2 and an anode layer 3 are disposed inside of an anode case 1a that is a part of the exterior body, then, on an upper portion of the anode layer 3, a separator 6 is disposed, on a surface of the separator 6, an air cathode layer 4 and an air cathode current collector 5 are disposed, finally, a nonaqueous liquid electrolyte 7 is added, and, thereby a power generating element can be obtained.

Furthermore, an atmosphere when a power generating element is formed is preferably appropriately selected depending on factors such as kinds of constituent members of the power generating element. For example, when an anode layer and an electrolyte used tend to react with atmospheric components, it is preferable to form a power generating element in an inert gas atmosphere. Examples of the inert gas include nitrogen and argon. On the other hand, when an anode layer and an electrolyte used are difficult to react with atmospheric components, a power generating element can be formed in the atmosphere.

In the first embodiment, a method for hermetically sealing an exterior body in which a power generating element is housed with an oxygen-containing gas encapsulated in the exterior body is preferably appropriately selected depending on factors such as kinds of constituent members of the power generating element. For example, when an anode layer and an electrolyte used are prone to react with atmospheric components, as is shown in the FIGS. 3A to 3E, a method where firstly a power generating element is formed in an inert gas atmosphere, then an exterior body is hermetically sealed with an inert gas encapsulated therein, and finally, an inert gas is replaced by an oxygen-containing gas can be cited. On the other hand, when an anode layer and an electrolyte used are difficult to react with atmospheric components, a method where firstly, a power generating element is formed in the atmosphere, then, an exterior body in which the power generating element is housed is hermetically sealed in the atmosphere can be cited. In this case, air inside of the exterior body may be further replaced with an oxygen-containing gas having a higher oxygen concentration (such as pure oxygen gas). The oxygen-containing gas in the first embodiment is the same as that described in the "A. Air secondary battery"; accordingly, a description thereof will be omitted here. A hermetically-sealed exterior body may be in a state where the inside thereof is pressurized. This is because an oxygen concentration is relatively increased and thereby a discharging step described below can be efficiently performed.

### (2) Discharging step

In the next place, a discharging step in the first embodiment will be described. A discharging step in the first embodiment is a step for discharging the power generating element.

In the first embodiment, the power generating element is discharged preferably to a state where the SOC is 50% or less, more preferably to a state where the SOC is 20% or less, and particularly preferably to a state where the SOC is 5% or less. On the other hand, in the first embodiment, it is preferable to discharge the power generating element to a state where the SOC is 0% or more. This is because when the SOC of the power generating element is within the range, the time-lapse deterioration during an initial storage time can be efficiently suppressed.

Discharge conditions in the discharging step are not particularly restricted as long as a desired discharge can be performed. A constant current discharge in the range of, for example, 0.01 mA/cm² to 1 mA/cm² can be cited.

Furthermore, the discharging step in the first embodiment can be applied at an arbitrary timing. That is, the discharging step may be applied before the hermetically sealing step, may be applied between the hermetically sealing step and the depressurizing step, or may be applied after the depressurizing step. Among these, in the first embodiment, the discharging step is preferably applied before the depressurizing step. This is because with an oxygen concentration maintained high, the discharging step can be efficiently performed.

### (3) Depressurizing step

In the next place, a depressurizing step in the first embodiment will be described. A depressurizing step in the first embodiment is a step for reducing a pressure inside of the exterior body to a pressure lower than atmospheric pressure after the hermetically sealing step.

A pressure inside of the exterior body after depressurization is not particularly restricted as long as it is a pressure lower than the atmospheric pressure. However, the pressure is preferably 0. 9 atm or less and more preferably 0.5 atm or less. This is because when the pressure is within the range, oxygen generated in an air cathode layer can be efficiently diffused. On the other hand, in the first embodiment, a pressure inside of the exterior body after depressurization is preferable to be 0.01 atm or more. This is because when the inside of the exterior body is excessively depressurized, an oxygen concentration becomes relatively low and thereby discharge properties may not be sufficiently exerted.

As a method for depressurizing the inside of the exterior body, a method where, for example, a vacuum (depressurizing) pump is used can be cited. As is shown in, for example, the FIG. 3D, when a gas is exhausted from a gas outlet 9b, a pressure inside of the exterior body can be reduced. Furthermore, in the first embodiment, it is preferable that after the depressurizing step, a gas inlet and a gas outlet are removed with a depressurized state maintained. This enables to miniaturize a system. By disposing, for example, a valve to each of the gas inlet and the gas outlet, a depressurized state can be maintained.

### 2. Second embodiment

In the next place, a second embodiment in a method of the invention for producing an air secondary battery will be described. A second embodiment in a method of the invention for producing an air secondary battery comprises the steps of: hermetically sealing an exterior body in which a power generating element that is constituted of an air cathode layer containing a conductive material and a metal oxide that is a discharge product, an anode layer containing an anode active material, and an electrolyte layer formed between the air cathode layer and the anode layer is housed with an oxygen-containing gas encapsulated therein; and depressurizing a pressure inside of the exterior body to a pressure lower than the atmospheric pressure after the hermetically sealing step.

According to the second embodiment, when an air cathode layer containing a metal oxide that is a discharge product is used, an air secondary battery where a power generating element is in a discharged state and the inside of an exterior body is in a depressurized state can be obtained more conveniently. Thereby, oxygen generated in an air cathode layer during charge can be easily diffused. Accordingly, bubbles of oxygen can be inhibited from staying in an interface of an air cathode layer and an electrolyte layer and thereby it is possible to inhibit ionic conduction in an interface from being disturbed. As a result, an air secondary battery in which charge-discharge properties are inhibited from deteriorating can be obtained. Furthermore, in the air secondary battery obtained according to the second embodiment, the inside of the exterior body is depressurized at the charge start time; accordingly, there is no need of connecting another device such as a vacuum pump. As a result, miniaturization of the air secondary battery and an improvement in energy efficiency accompanying the miniaturization can be attained. Furthermore, according to the second embodiment, an air secondary battery in which a power generating element is in a discharged state can be obtained. Accordingly, a metal ion (such as Li ion) that is a conducting ion is rendered a chemically stable metal oxide (such as Li₂O or Li₂O₂) in an air cathode layer. As a result thereof, there is an advantage that time-lapse deterioration during initial storage can be efficiently inhibited.

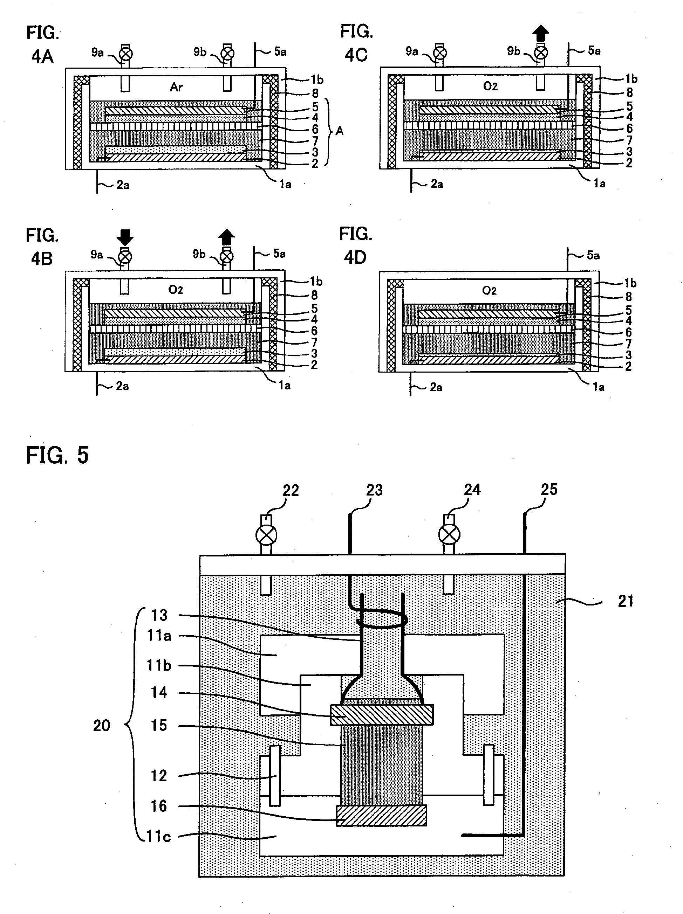

FIGS. 4A to 4D are a schematic sectional view showing an example of the second embodiment in a method of the invention for producing an air secondary battery. In a method shown in FIGS. 4A to 4D for producing an air secondary battery, firstly, in an argon atmosphere, a power generating element is formed inside of an anode case 1a, thereafter, the power generating element is hermetically sealed with a packing 8 and an air cathode case 1b (FIG. 4A). In this case, the anode case 1a and the air cathode case 1b form an exterior body. Here, an air cathode layer 5 of the power generating element A in FIG. 4A contains in advance a conductive material and a metal oxide (such as Li₂O, Li₂O₂) that is a discharge product. On the other hand, a gas inlet 9a and a gas outlet 9b are disposed to the air cathode case 1b. In the next place, as shown in FIG. 4B, oxygen is introduced from the gas inlet 9a and simultaneously therewith a gas is exhausted from the gas outlet 9b to replace the inside of the exterior body from an argon atmosphere to an oxygen atmosphere. Then, as shown in FIG. 4C, a gas is exhausted from the gas outlet 9b to depressurize the inside of the exterior body. For example, a vacuum pump can be used to exhaust. At the last, as shown in FIG. 4D, by removing the gas inlet 9a and the gas outlet 9b with a depressurized state maintaining, an air secondary battery can be obtained.

### (1) Hermetically sealing step

A hermetically sealing step in the second embodiment is a step for hermetically sealing an exterior body in which a power generating element that is constituted of an air cathode layer containing a conductive material and a metal oxide that is a discharge product, an anode layer containing an anode active material, and an electrolyte layer formed between the air cathode layer and the anode layer is housed with an oxygen-containing gas encapsulated therein.

The air cathode layer used in the second embodiment contains a conductive material and a metal oxide that is a discharge product. Usually, a metal oxide that is a discharge product is supported on a surface of the conductive material. Furthermore, a kind of the metal oxide that is a discharge product is different depending on a kind of an aimed air secondary battery. In the case of a lithium air secondary battery, the metal oxide is usually at least one of Li₂O and Li₂O₂.

As a method for forming an air cathode layer like this, for example, a method where an air cathode layer is discharged to pre-treat can be cited. Specifically, a method where from an air cathode layer before discharge and an anode layer and an electrolyte layer for pre-treatment, a power generating element for pre-treatment is formed and the power generating element is discharged can be cited. Thus, in the second embodiment, a power generating element can be formed from an air cathode layer pretreated in advance. Discharge conditions and others in the pre-treatment are the same as that described in "(2) Discharging step" in the first embodiment. Furthermore, other issues concerning hermetically sealing step are the same as that described in "(1) Hermetically sealing step" in the first embodiment.

### (2) Depressurizing step

A depressurizing step in the second embodiment is the same as that described in "(3) Depressurizing step" in the first embodiment. Accordingly, a description thereof is omitted here.

The present invention is not restricted to the above-mentioned embodiments. The embodiments are shown only for illustration and whatever that has a substantially same configuration with a technical idea described in claims of the invention and exerts an effect the same as that described above is included in a technical range of the invention.

### Examples

In what follows, the invention will be more specifically described with reference to Examples.

### [Example 1]

### (Preparation of air cathode)

In the beginning, 1 g of Ketjen Black (manufactured by Ketjen Black International Company), 1.9 g of electrolytic manganese dioxide (manufactured by Kojundo Chemical Laboratory Co., Ltd.), and 1.5 g of PVDF polymer (manufactured by Kureha Corporation) were mixed, NMP (N-methyl pyrrolidone, manufactured by Kanto Kagaku) was added thereto, followed by stirring with a kneader under conditions of 2000 rpm for 30 min, and thereby an air cathode layer-forming composition was obtained. Thereafter, the air cathode layer-forming composition was coated on a carbon paper (air cathode current collector, trade name: TGP-H-090®, manufactured by Toray Industries, Inc., thickness: 0.28 mm) by a doctor blade method so as to have a thickness of 100 µm. In the next place, the coated carbon paper was dried at 80°C for 1 hour and vacuum dried at 60°C for 1 day to remove NMP. Finally, a dried coated carbon paper was punched into a φ of 18 mm and thereby an air cathode having an air cathode current collector and an air cathode layer was obtained.

### (Assembly of air secondary battery element)

In the next place, an air secondary battery element with the resulted air cathode was prepared (see FIG. 5). The element was all assembled in an argon box (dew point: -40°C or lower) . Here, an air secondary battery element 20 has cases 11a and 11b made of Teflon® and a SUS case 11c. The cases 11b and 11c are connected with a bolt 12. Furthermore, the case 11c has an opening for supplying oxygen and to the opening, a hollow current take-out portion 13 is disposed. Still furthermore, the air cathode obtained according to the method mentioned above was used for an air cathode 14, a nonaqueous liquid electrolyte obtained by dissolving LiClO₄ at a concentration of 1 M in propylene carbonate (PC) was used for a nonaqueous liquid electrolyte 15, and metal lithium (manufactured by Kyokuto Kinzoku Co., Ltd., thickness: 200 µm, diameter: 16 mm) was used for an anode layer 16.

### (Preparation of cell for evaluation)

Then, an air cathode lead 23 was connected to a SUS current output portion 13, an anode lead 25 was connected to the SUS case 11c and the air secondary battery element 20 was housed in a glass container 21 having a volume of 1000 cc. Thereafter, the glass container 21 was hermetically sealed, and the hermetically sealed glass container 21 was taken out of the inside of the argon box. In the next place, oxygen was introduced from an oxygen gas bomb through a gas inlet 22, simultaneously therewith the inside of the glass container was exhausted from a gas outlet 24 and thereby the inside of the glass container was changed from an argon atmosphere to an oxygen atmosphere at atmospheric pressure. Thereafter, discharge was performed under a constant current condition of 0.01 mA/cm². Thereby, a state where the SOC is 10% was attained. After the discharge, a vacuum pump (not shown in the drawing) was connected to the gas outlet 24 and a pressure inside of the glass container was reduced to 0.5 atm. A pressure inside of the glass container was measured by use of a commercially available manometer. Thereby, a cell for evaluation was obtained.

### [Comparative Example 1]

A cell for evaluation was obtained in a manner similar to that of Example 1 except that depressurization was not applied.

### [Evaluation]

A charge-discharge test was performed with each of the cells for evaluation obtained in Example 1 and Comparative Example 1. Charge-discharge conditions are shown below. The charge-discharge was started from charge and performed in a thermostat bath at 25°C.
(1) Charge is performed at a current of 100 mA/(g-carbon) up to a battery voltage of 4.3 V, and
(2) Discharge is performed at a current of 100 mA/(g-carbon) up to a battery voltage of 2 V.

Here, "g-carbon" represents a weight of a conductive material.

When discharged capacitance maintenances of Example 1 and Comparative Example 1 are compared, in Comparative Example 1, it is found that the discharged capacitance maintenance was remarkably deteriorated. This is considered that, since bubbles of oxygen generated in the air cathode layer during charge stayed in an interface between the air cathode layer and an electrolyte layer, ionic conduction in the interface was disturbed. On the other hand, in Example 1, the discharged capacitance maintenance was excellent. This is considered that since the inside of the exterior body is depressurized at the charge start time, oxygen generated during charge is readily diffused, and thereby bubbles of oxygen are inhibited from staying in an interface between an air cathode layer and an electrolyte layer. Thus, it is confirmed that an air secondary battery of the invention can inhibit deterioration in the charge-discharge properties caused by oxygen generated in an air cathode layer during charge.

## Claims

1. An air secondary battery, comprising:
a power generating element constituted of an air cathode layer containing a conductive material, an anode layer containing an anode active material, and an electrolyte layer formed between the air cathode layer and the anode layer; and
an exterior body that houses the power generating element,
**characterized in that** the exterior body is hermetically sealed with an oxygen-containing gas encapsulated therein; and
at a charge start time, a pressure inside of the exterior body is lower than an atmospheric pressure.

2. The air secondary battery of Claim 1, **characterized in that** at the charge start time, the power generating element is in a state where state of charge (SOC) is 50% or less.

3. The air secondary battery of Claim 1 or 2, **characterized in that** the pressure inside of the exterior body is lower than a pressure in a depressurized state generated by a discharge reaction.

4. The air secondary battery of any one of Claims 1 to 3, **characterized in that** the pressure inside of the exterior body is 0.9 atm or less.

5. A method for producing an air secondary battery, comprising the steps of:
hermetically sealing an exterior body in which a power generating element constituted of an air cathode layer containing a conductive material, an anode layer containing an anode active material, and an electrolyte layer formed between the air cathode layer and the anode layer is housed with an oxygen-containing gas encapsulated therein; and
discharging the power generating element;
**characterized in that** said method further comprises the step of:
depressurizing a pressure inside of the exterior body lower than an atmospheric pressure after the hermetically sealing step.

6. The method for producing an air secondary battery of Claim 5, **characterized in that**, during the discharging step, the power generating element is discharged to a state where the SOC is 50% or less.

7. The method for producing an air secondary battery of Claim 5 or 6, **characterized in that**, during the discharging step, the pressure inside of the exterior body is depressurized to a pressure of 0.9 atm or less.

8. A method for producing an air secondary battery, comprising the step of:
hermetically sealing an exterior body in which a power generating element constituted of an air cathode layer containing a conductive material and a metal oxide that is a discharge product, an anode layer containing an anode active material, and an electrolyte layer formed between the air cathode layer and the anode layer is housed with an oxygen-containing gas encapsulated therein;
**characterized in that** said method further comprises the step of:
depressurizing a pressure inside of the exterior body lower than an atmospheric pressure after the hermetically sealing step.

9. The method for producing an air secondary battery of Claim 8, **characterized in that,** during the depressurizing step, the pressure inside of the exterior body is depressurized to a pressure of 0.9 atm or less.

## Patentansprüche

1. Luftsekundärbatterie, umfassend:
ein energieerzeugendes Element bestehend aus einer Luftkathodenschicht, die ein leitfähiges Material enthält, einer Anodenschicht, die ein aktives Anodenmaterial enthält, und einer Elektrolytschicht, die zwischen der Luftkathodenschicht und der Anodenschicht ausgebildet ist; und
ein Außengehäuse, das das energieerzeugende Element beherbergt,
**dadurch gekennzeichnet, dass** das Außengehäuse hermetisch abgedichtet ist, wobei ein sauerstoffhaltiges Gas darin eingekapselt ist; und
zu einem Startzeitpunkt des Ladens, ein Druck innerhalb des Außengehäuses geringer als ein Atmosphärendruck ist.

2. Luftsekundärbatterie nach Anspruch 1, **dadurch gekennzeichnet, dass** zum Startzeitpunkt des Ladens das energieerzeugende Element sich in einem Zustand befindet, bei dem der Ladezustand (state of charge (SOC)) 50 % oder weniger beträgt.

3. Luftsekundärbatterie nach Anspruch 1 oder 2, **dadurch gekennzeichnet, dass** der Druck innerhalb des Außengehäuses geringer ist als ein Druck in einem durch eine Entladungsreaktion erzeugten drucklosen Zustand.

4. Luftsekundärbatterie nach einem der Ansprüche 1 bis 3, **dadurch gekennzeichnet, dass** der Druck innerhalb des Außengehäuses 0,9 atm oder weniger beträgt.

5. Verfahren zur Herstellung einer Luftsekundärbatterie, umfassend die Schritte:
hermetisches Abdichten eines Außengehäuses, in dem ein energieerzeugendes Element bestehend aus einer Luftkathodenschicht, die ein leitfähiges Material enthält, einer Anodenschicht, die ein aktives Anodenmaterial enthält, und einer Elektrolytschicht, die zwischen der Luftkathodenschicht und der Anodenschicht ausgebildet ist, untergebracht ist, wobei ein sauerstoffhaltiges Gas darin eingekapselt ist; und
Entladen des energieerzeugenden Elements;
**dadurch gekennzeichnet, dass** das Verfahren ferner den Schritt umfasst:
Absenken eines Drucks innerhalb des Außengehäuses auf weniger als einen Atmosphärendruck nach dem Schritt des hermetischen Abdichtens.

6. Verfahren zur Herstellung einer Luftsekundärbatterie nach Anspruch 5, **dadurch gekennzeichnet, dass** während des Schritts des Entladens das energieerzeugende Element bis zu einem Zustand entladen wird, bei dem der SOC 50 % oder weniger beträgt.

7. Verfahren zur Herstellung einer Luftsekundärbatterie nach Anspruch 5 oder 6, **dadurch gekennzeichnet, dass** während des Schritts des Entladens der Druck innerhalb des Außengehäuses auf einen Druck von 0,9 atm oder weniger abgesenkt wird.

8. Verfahren zur Herstellung einer Luftsekundärbatterie, umfassend den Schritt:
hermetisches Abdichten eines Außengehäuses, in dem ein energieerzeugendes Element bestehend aus einer Luftkathodenschicht, die ein leitfähiges Material und ein Metalloxid, das ein Entladungsprodukt ist, enthält, einer Anodenschicht, die ein aktives Anodenmaterial enthält, und einer Elektrolytschicht, die zwischen der Luftkathodenschicht und der Anodenschicht angeordnet ist, untergebracht ist, wobei ein sauerstoff-haltiges Gas darin eingekapselt ist;
**dadurch gekennzeichnet, dass** das Verfahren ferner den Schritt umfasst:
Absenken eines Drucks innerhalb des Außengehäuses auf weniger als einen Atmosphärendruck nach dem Schritt des hermetischen Abdichtens.

9. Verfahren zur Herstellung einer Luftsekundärbatterie nach Anspruch 8, **dadurch gekennzeichnet, dass** während des Schritts des Absenkens des Drucks der Druck innerhalb des Außengehäuses auf einen Druck von 0,9 atm oder weniger abgesenkt wird.

## Revendications

1. Batterie secondaire à air, comprenant :
un élément générateur d'énergie constitué d'une couche de cathode à air contenant une matière conductrice, d'une couche d'anode contenant une matière active d'anode, et d'une couche d'électrolyte formée entre la couche de cathode à air et la couche d'anode ; et
un corps extérieur qui loge l'élément générateur d'énergie,
**caractérisée en ce que** le corps extérieur est scellé hermétiquement avec un gaz contenant de l'oxygène qui y est encapsulé ; et
**en ce que**, au moment du début de la charge, la pression à l'intérieur du corps extérieur est inférieure à la pression atmosphérique.

2. Batterie secondaire à air selon la revendication 1, **caractérisée en ce que**, au moment du début de la charge, l'élément générateur d'énergie est dans un état dans lequel l'état de charge (SOC pour "State Of Charge") est de 50 % ou moins.

3. Batterie secondaire à air selon la revendication 1 ou 2, **caractérisée en ce que** la pression à l'intérieur du corps extérieur est inférieure à la pression à l'état dépressurisé engendré par une réaction de décharge.

4. Batterie secondaire à air selon l'une quelconque des revendications 1 à 3, **caractérisée en ce que** la pression à l'intérieur du corps extérieur est de 0,9 atm ou moins.

5. Procédé de production d'une batterie secondaire à air, comprenant les étapes consistant :
à sceller hermétiquement un corps extérieur dans lequel est logé un élément générateur d'énergie constitué d'une couche de cathode à air contenant une matière conductrice, d'une couche d'anode contenant une matière active d'anode, et d'une couche d'électrolyte formée entre la couche de cathode à air et la couche d'anode avec un gaz contenant de l'oxygène qui y est encapsulé ; et
à décharger l'élément générateur d'énergie,
**caractérisé en ce que** ledit procédé comprend en outre l'étape consistant à dépressuriser une pression à l'intérieur du corps extérieur plus bas que la pression atmosphérique après l'étape de scellement hermétique.

6. Procédé de production d'une batterie secondaire à air selon la revendication 5, **caractérisé en ce que**, durant l'étape de décharge, l'élément générateur d'énergie est déchargé jusqu'à un état dans lequel le SOC est de 50 % ou moins.

7. Procédé de production d'une batterie secondaire à air selon la revendication 5 ou 6, **caractérisé en ce que**, durant l'étape de décharge, la pression à l'intérieur du corps extérieur est dépressurisée jusqu'à une pression de 0,9 atm ou moins.

8. Procédé de production d'une batterie secondaire à air, comprenant l'étape consistant :
à sceller hermétiquement un corps extérieur dans lequel est logé un élément générateur d'énergie constitué d'une couche de cathode à air contenant une matière conductrice et un oxyde métallique qui est un produit de décharge, d'une couche d'anode contenant une matière active d'anode, et d'une couche d'électrolyte formée entre la couche de cathode à air et la couche d'anode avec un gaz contenant de l'oxygène qui y est encapsulé ;
**caractérisé en ce que** ledit procédé comprend en outre l'étape consistant à dépressuriser une pression à l'intérieur du corps extérieur plus bas que la pression atmosphérique après l'étape de scellement hermétique.

9. Procédé de production d'une batterie secondaire à air selon la revendication 8, **caractérisé en ce que**, durant l'étape de dépressurisation, la pression à l'intérieur du corps extérieur est dépressurisée jusqu'à une pression de 0,9 atm ou moins.
